# FASCICULE DE BREVET EUROPEEN

(11) **EP 4 303 032 B1**
(45) Date de publication et mention de la délivrance du brevet: **23.04.2025**
(21) Numéro de dépôt: 23179606.1
(22) Date de dépôt: 15.06.2023
(51) Int. Cl.: B60B 3/14, B60B 27/00

(54) **SUPPORT DE ROUE POUR VÉHICULE AUTOMOBILE, PROCÉDÉ DE DIMENSIONNEMENT ET VÉHICULE ASSOCIÉS**
RADTRÄGER FÜR EIN KRAFTFAHRZEUG, ENTSPRECHENDES HERSTELLUNGSVERFAHREN UND FAHRZEUG
WHEEL SUPPORT FOR A MOTOR VEHICLE, ASSOCIATED MANUFACTURING METHOD AND VEHICLE

(30) Priorité: 08.07.2022 FR 2207016
(43) Date de publication de la demande: 10.01.2024
(73) Titulaire: Renault s.a.s, 92100 Boulogne Billancourt (FR)
(72) Inventeur: GUERIN, Stéphane, 72000 LE MANS (FR); GUILBERT, Carl, 72000 LE MANS (FR); MOINARD, Julien, 72000 LE MANS (FR); REULLIER, Anthony, 72000 LE MANS (FR)

(56) Documents cités:
- WO-A2-2009/129231
- DE-A1- 19 537 808

## Description

### Domaine technique

La présente invention concerne un support de roue pour véhicule automobile, notamment un véhicule utilitaire.

### Techniques antérieures

Une roue d'un véhicule automobile, notamment d'un véhicule utilitaire, est connue de WO 2009/129231 A2 et comprend par exemple une jante, un disque de frein et un support de roue.

Le support de roue du véhicule automobile est généralement une pièce de fonderie massive sensiblement cylindrique pesant par exemple 8 kg. Le support de roue permet par exemple de rallonger une liaison entre une transmission du véhicule automobile et la jante de la roue, notamment pour augmenter la tenue de route du véhicule automobile. Un véhicule automobile muni d'un support de roue est par exemple un véhicule utilitaire de plus de 2,5 tonnes et de plus de 5 mètres de long.

Le support de roue comprend un premier ensemble de trous répartis régulièrement le long d'un premier diamètre du support de roue. Le premier ensemble de trous est configuré pour assembler le support de roue avec le disque de frein.

Le support de roue comprend un deuxième ensemble de trous répartis régulièrement le long d'un deuxième diamètre du support de roue. Le deuxième ensemble de trous est configuré pour assembler le support de roue avec la jante. L'assemblage du support de roue avec la jante s'effectue du côté opposé à la fixation du support de roue avec le disque de frein.

Il a été constaté que seules certaines zones du support de roue massif participent au maintien de la roue.

Comme la consommation du véhicule est directement proportionnelle à la masse du véhicule, il est proposé de réduire la masse du support de roue tout en assurant une rigidité suffisante du support de roue pour maintenir la roue sur le véhicule.

Lorsque la roue est assemblée et montée sur le véhicule automobile, le support de roue est situé vers l'extérieur du véhicule automobile par rapport au disque de frein. La jante est quant à elle située vers l'extérieur du véhicule automobile par rapport au support de roue. Le disque de frein est situé vers l'extérieur du véhicule automobile par rapport à un moyeu de la roue.

### Exposé de l'invention

La présente invention a donc pour objectif de pallier tout ou partie des inconvénients précités et propose un support de roue de masse réduite.

La présente invention a pour objet un support de roue pour véhicule automobile comprenant un flasque creux et un cylindre creux coaxiaux, le cylindre creux étant solidaire du flasque creux, le diamètre extérieur du flasque creux étant supérieur au diamètre extérieur du cylindre creux de sorte que le cylindre ne recouvre pas le flasque dans une portion annulaire du flasque creux, le flasque creux comportant une première face en contact avec le cylindre, une deuxième face opposée à la première face et des taraudages s'étendant entre les première et deuxième faces et traversant le flasque, les taraudages étant disposés selon un diamètre du flasque dans la portion annulaire, la portion annulaire comprend des premiers évidements disposés entre deux taraudages successifs et s'étendant de la surface périphérique extérieure du flasque à la première face du flasque, une nervure étant disposée dans chaque évidement de manière à rigidifier le flasque.

Ainsi, la présente invention permet de réduire la masse d'un support de roue tout en garantissant une bonne tenue mécanique du support de roue, notamment en endurance.

De préférence, la deuxième face du flasque est destinée à être en contact avec une jante, chaque taraudage étant configuré pour accueillir une vis de fixation de la jante.

Dans un mode de réalisation, le support de roue comporte des deuxièmes taraudages comportant chacun un axe central parallèle à l'axe central du cylindre et traversant le cylindre, les deuxièmes taraudages étant disposés selon un diamètre du cylindre, le flasque comprenant des deuxièmes évidements prolongeant les deuxièmes taraudages, une première face du cylindre opposée à une deuxième face du cylindre en contact avec le flasque étant destiné à être en contact avec un disque de frein, chaque deuxième taraudage étant configuré pour accueillir une vis de fixation du disque.

Avantageusement, chaque taraudage est inséré dans une nervure de taraudage.

La présente invention a également pour objet une roue de véhicule automobile comprenant une jante, un disque de frein et un support de roue tel que défini précédemment, la jante étant en contact avec la deuxième face du flasque et le disque de frein étant en contact avec une première face du cylindre opposée à une deuxième face du cylindre en contact avec le flasque.

La présente invention a également pour objet un véhicule automobile comprenant au moins une roue telle que définit précédemment.

La présente invention a en outre pour objet un procédé de dimensionnement d'un support de roue pour véhicule automobile, le support de roue comprenant un flasque creux et un cylindre creux coaxiaux, le cylindre creux étant solidaire du flasque creux, le diamètre extérieur du flasque creux étant supérieur au diamètre extérieur du cylindre creux de sorte que le cylindre ne recouvre pas le flasque dans une portion annulaire du flasque creux, le flasque creux comportant une première face en contact avec le cylindre, une deuxième face opposée à la première face et des premiers taraudages s'étendant entre les première et deuxième faces et traversant le flasque, les premiers taraudages étant disposés selon un diamètre du flasque dans la portion annulaire, le procédé comprenant la réalisation d'évidements dans la portion annulaire disposés entre deux premiers taraudages successifs et s'étendant de la surface périphérique extérieure du flasque à la première face du flasque.

### Brève description des dessins

D'autres objectifs, caractéristiques et avantages de l'invention apparaîtront à la lecture de la description suivante, donnée uniquement à titre d'exemple non limitatif, et faite en référence aux dessins annexés sur lesquels :
[Fig 1] et [Fig 2] illustrent schématiquement un véhicule automobile selon l'invention et une roue du véhicule, respectivement ;
[Fig 3] illustre schématiquement une vue de dessus d'un support de roue selon un premier mode de réalisation de l'invention ;
[Fig 4] illustre schématiquement une vue de dessous du support de roue selon un premier mode de réalisation de l'invention ;
[Fig 5] illustre schématiquement une vue du support de roue selon un deuxième mode de réalisation de l'invention ; et=
[Fig 6] illustre schématiquement un procédé de dimensionnement du support de roue selon l'invention.

### Exposé détaillé d'au moins un mode de réalisation

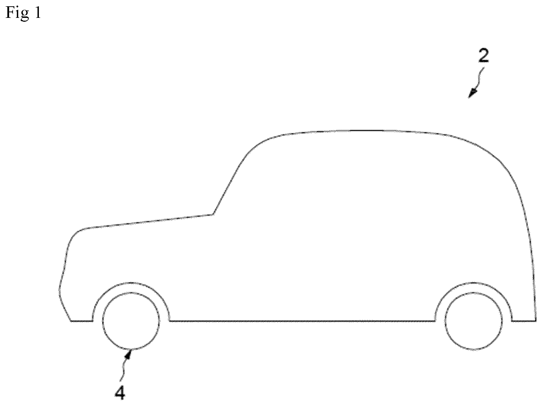

La figure 1 représente schématiquement un véhicule automobile 2 utilitaire muni d'une roue 4.

Dans un mode de réalisation, le véhicule 2 est un véhicule utilitaire.

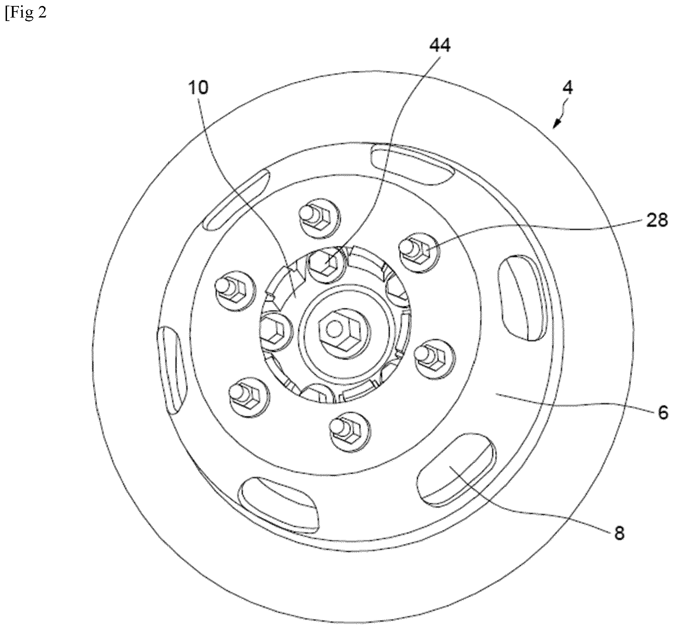

La roue 4, illustrée sur la figure 2, comprend une jante 6, un disque de frein 8 et un support de roue 10. Avantageusement, toutes les roues 4 du véhicule automobile 2 utilitaire sont munies chacune d'un support de roue 10. Le véhicule automobile 2 est ainsi de masse réduite comparé à un véhicule automobile équivalent muni de supports de roue connus de l'état de la technique. En outre, le véhicule automobile 2 consomme moins de carburant et/ou d'électricité qu'un véhicule automobile équivalent muni de supports de roue connus de l'état de la technique.

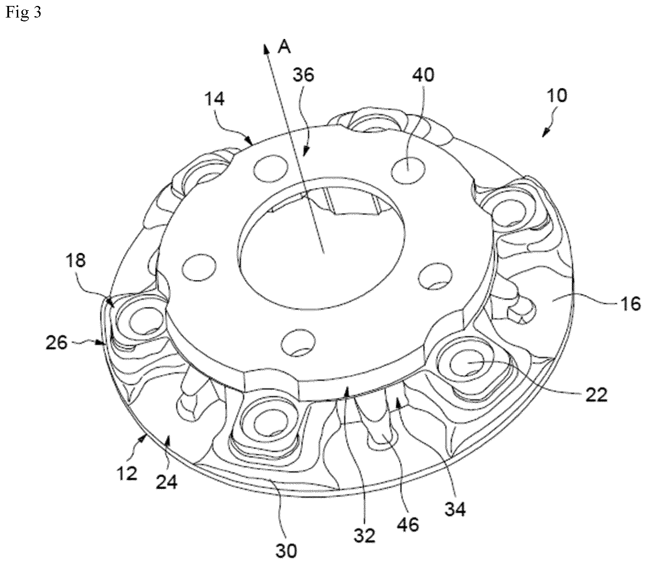

La figure 3 représente schématiquement une vue de dessus du support de roue 10 selon un premier mode de réalisation de l'invention. Le support de roue 10 est par exemple réalisé par un procédé standard de fonderie. Le support de roue 10 est par exemple composé d'un matériau en fonte et/ou en aluminium et/ou en acier au carbone GS52 et/ou en AlSi7Mg03.

Le support de roue 10 comprend un flasque 12 creux et un cylindre 14 creux, le flasque et le cylindre 14 étant coaxiaux. Le cylindre 14 creux est solidaire du flasque 12 creux. Par exemple, le cylindre 14 creux surmonte le flasque 12 creux. Le diamètre extérieur du flasque 12 creux est supérieur au diamètre extérieur du cylindre 14 creux de sorte que le cylindre 14 ne recouvre pas le flasque 12 dans une portion annulaire 16 du flasque 12 creux.

Le flasque 12 creux comporte une première face 18 en contact avec le cylindre 14 creux et une deuxième face 20 opposée à la première face 18.

Le flasque 12 creux comprend des premiers taraudages 22 s'étendant entre les première et deuxième faces 18, 20 et traversant le flasque 12. Les premiers taraudages 22 sont disposés selon un diamètre du flasque 12 dans la portion annulaire 16. Avantageusement, les premiers taraudages 22 sont régulièrement disposés dans la portion annulaire 16. Dans l'exemple de réalisation de la figure 2, le flasque 12 comprend six premiers taraudages 22 espacés d'un angle de 60 degrés. Bien entendu, le flasque 12 peut comprendre un nombre de premiers taraudages 22 différents. Les premiers taraudages comportent par exemple chacun un axe central parallèle à l'axe central A du cylindre 14.

La portion annulaire 16 comprend des premiers évidements 24 disposés chacun entre deux premiers taraudages 22 successifs. Les premiers évidements 24 sont formés dans la partie annulaire et s'étendent de la surface extérieure périphérique du flasque 26 à la première face 18 du flasque 12.

Les premiers évidements 24 sont par exemple dimensionnés de sorte que les contraintes, par exemple des contraintes de flexion et/ou de rotation, subies par le support de roue 10 monté sur le véhicule automobile 2 ne dépassent pas deux tiers de la limite élastique du support de roue 10 au cours de son utilisation. De préférence, les premiers évidement 24 sont dimensionnés de sorte que les contraintes ne dépassent par un tiers de la limite élastique du support de roue 10.

Les premiers évidements 24 permettent de diminuer la quantité de matière du support de roue 10 permettant de réduire la masse du support de roue 10. Les premiers évidements 24 réduisent localement la dimension du flasque 12, selon l'axe central A du cylindre 14, dans la portion annulaire 16 du flasque 12. Par exemple, l'épaisseur entre la deuxième face 20 du flasque 12 et la surface opposée évidée est égale à six millimètres tout en garantissant une rigidité importante du flasque 12. En outre, la tenue mécanique du support de roue 10 est équivalente à la tenue mécanique d'un support de roue connu de l'état de la technique, tout en ayant une masse réduite.

Lors du montage d'une roue 4 comprenant un support de roue 10 et une jante 6, la deuxième face 20 du flasque 12 vient en contact avec la jante 6. Les premiers taraudages 22 accueillent respectivement une vis de fixation de la jante 28 (visible sur la figure 2) sur le support de roue 10. Ainsi, le support de roue 10 s'assemble avec la jante 6 du côté de la deuxième face 20 du flasque 12 au moyen des vis de fixation de la jante 28. Avantageusement, les vis de fixation de la jante 28 sont insérées et serrées depuis la deuxième face 20 du flasque 12. Les vis de fixation de la jante 28 comprennent par exemple des boulons de roue et/ou goujons de fixation de roue.

En variante, chaque premier taraudage 22 est inséré dans une nervure de taraudage 30. Les nervures de taraudage 30 permettent de renforcer la structure du support de roue 10. Les nervures de taraudage 30 enserrant chaque premier taraudage 22 le long d'au moins une partie de la périphérie de chaque premier taraudage 22 permettent d'augmenter la rigidité du support de roue 10. La solidité du support de roue 10 est ainsi augmentée notamment lors du serrage de la jante 6 sur le support de roue 10, permettant à la roue 4 de résister à des chocs survenant par exemple lors d'un passage volontaire d'un trottoir ou d'un choc involontaire avec un trottoir par exemple à la suite d'un aquaplanage.

Le support de roue 10 comprend une nervure 46 disposée dans chacun des premiers évidements 24.

La nervure 46 s'étend par exemple radialement depuis une surface évidée du flasque 34, la surface évidée du flasque 34 s'étendant selon l'axe central A, vers la surface périphérique extérieure du flasque 26. Avantageusement, la nervure 46 est en contact par deux de ses faces avec le flasque 12. Les nervures 46 permettent par exemple de rigidifier le flasque 12 et/ou le cylindre 14. La solidité du support de roue 10 est ainsi augmentée notamment lors du serrage de la jante 6 sur le support de roue 10 et/ou du serrage du support de roue 10 sur le disque de frein 8.

En variante, plusieurs nervures 46 sont disposées dans un des premiers évidements 24 du support de roue 10. Dans un mode de réalisation particulier, certains des premiers évidements 24 du support de roue 10 ne comprennent pas de nervure 46.

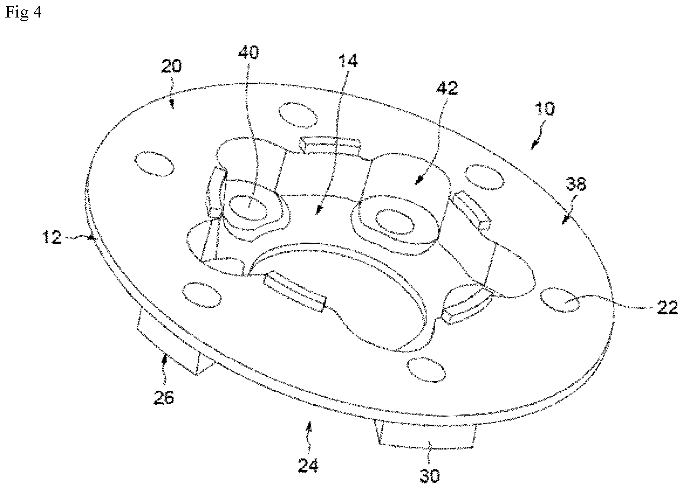

La figure 4 représente schématiquement une vue de dessous du support de roue 10 de la figure 3. Le cylindre 14 comprend une première face 36 et une deuxième face 38, la première face 36 du cylindre 14 étant opposée à la deuxième face 38 du cylindre 14, la deuxième face 38 du cylindre 14 étant en contact avec le flasque 12. Plus précisément, la deuxième face 38 du cylindre 14 est en contact avec une partie de la première face 18 du flasque 12.

Le support de roue 10 comprend des deuxièmes taraudages 40 comportant chacun un axe central parallèle à l'axe central A du cylindre 14 et traversant le cylindre 14.

De préférence, les deuxièmes taraudages 40 sont disposés selon un diamètre du cylindre 14. Les deuxièmes taraudages 40 peuvent être disposés régulièrement selon un diamètre du cylindre 14. Dans l'exemple de réalisation de la figure 2, le cylindre 14 comprend cinq deuxièmes taraudages 40 espacés d'un angle de 72 degrés. Le cylindre 14 peut toutefois comprendre un nombre de deuxièmes taraudages 40 différents, par exemple égal au nombre de premiers taraudages 22 du flasque 12. Les premiers taraudages 22 du flasque 12 et les deuxièmes taraudages 40 du cylindre 14 sont par exemple angulairement alignés.

En variante, le flasque 12 comprend des deuxièmes évidements 42 prolongeant axialement les deuxièmes taraudages 40.

Lors du montage d'une roue 4 comprenant un support de roue 10 et un disque de frein 8, la première face 36 du cylindre 14 vient en contact avec le disque de frein 8. Les deuxièmes taraudages 40 sont configurés pour accueillir respectivement une vis de fixation du disque de frein 44 (visible sur la figure 2) au support de roue 10. Ainsi, le support de roue 10 s'assemble avec le disque de frein 8 du côté de la première face 36 du cylindre 14 au moyen des vis de fixation du disque de frein 44. Les vis de fixation du disque de frein 44 sont insérées et serrées depuis la deuxième face 38 du cylindre 14. Les vis de fixation du disque de frein 44 sont par exemple de même nature que les vis de fixation de la jante 28. Les deuxièmes évidements 42 permettent de faciliter le montage de la roue 4, les vis de fixation du disque de frein 44 pouvant ainsi traverser le cylindre 14. De préférence, les deuxièmes évidements 42 s'étendent sur une surface plus importante qu'une section transversale d'une vis de fixation du disque de frein 44 de manière à réduire d'avantage la masse du support de roue 10.

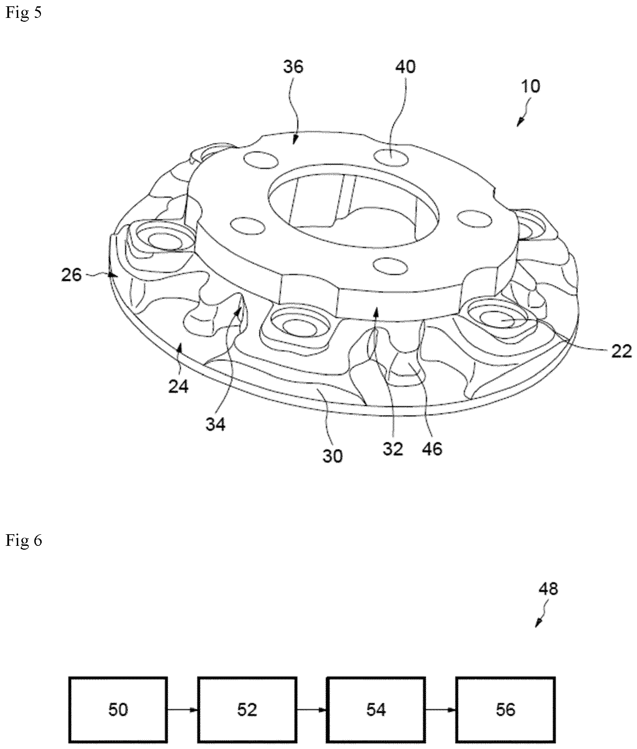

La figure 5 représente schématiquement une vue de dessus d'un support de roue 10 selon un deuxième mode de réalisation de l'invention. Dans ce deuxième mode de réalisation, le support de roue 10 comprend des nervures de taraudage 30 enserrant radialement les premiers taraudages 22 du flasque.

Le support de roue 10 comprend des nervures 46 s'étendant le long de la surface évidée du flasque 34 de manière à lier deux nervures de taraudages 30 angulairement successives.

Le support de roue 10 présente une symétrie de rotation afin de réduire un phénomène de balourd lors de la circulation d'un véhicule automobile 2. Un support de roue 10 selon l'invention permet par exemple un gain de masse de 500 grammes à 1,5 kilogrammes par rapport à un support de roue connu de l'état de la technique.

La figure 6 représente schématiquement un exemple de procédé 48 de dimensionnement du support de roue 10.

Les premiers évidements 24 sont dimensionnés par exemple à partir d'un algorithme d'optimisation topologique.

Lors d'une première étape 50, un modèle du support de roue 10 est réalisé.

Par exemple un modèle numérique du support de roue 10 est réalisé.

Puis on effectue une étape 52 de discrétisation du modèle numérique afin de déterminer les contraintes subies par le support de roue 10 à la suite de l'application de cas de chargement selon la méthode des éléments finis.

Bien entendu, les contraintes subies par le support de roue peuvent être déterminées selon une autre méthode de détermination de contraintes.

Lors d'une étape 54, on applique un cas de chargement de référence sur le support de roue. Simultanément, des premiers évidements 24 tels que définis précédemment sont créés dans la portion annulaire 16.

Les dimensions des premiers évidements 24 sont modifiées au cours de l'étape 54 selon une plage de valeurs prédéterminée et pour chaque valeur, les contraintes subis par le support de roue 10 sont déterminées.

Lorsque les contraintes subies sont inférieures à des contraintes de référence représentatives d'une tenue mécanique satisfaisante du support de roue 10 permettant un maintien optimal de la roue sur le véhicule, on effectue une étape 56 de validation des dimensions au cours de laquelle les dimensions des premiers évidements 24 sont conservées pour réaliser le support de roue 10 selon par exemple un procédé de fonderie.

En variante, les deuxièmes évidements 42 sont dimensionnés de manière similaire simultanément au dimensionnement des premiers évidements 24.

Selon encore une autre variante, les nervures 30, 46 sont dimensionnées de manière similaire simultanément au dimensionnement des premiers évidements 24.

## Revendications

1. Support de roue (10) pour véhicule automobile (2) comprenant un flasque (12) creux et un cylindre (14) creux coaxiaux, le cylindre (14) creux étant solidaire du flasque (12) creux, le diamètre extérieur du flasque (12) creux étant supérieur au diamètre extérieur du cylindre (14) creux de sorte que le cylindre (14) ne recouvre pas le flasque (12) dans une portion annulaire (16) du flasque (12) creux, le flasque (12) creux comportant une première face (18) en contact avec le cylindre (14), une deuxième face (20) opposée à la première face (18) et des premiers taraudages (22) s'étendant entre les première et deuxième faces (18, 20) et traversant le flasque (12), les premiers taraudages (22) étant disposés selon un diamètre du flasque (12) dans la portion annulaire (16), la portion annulaire (16) comprenant des premiers évidements (24) disposés entre deux premiers taraudages (22) successifs et s'étendant de la surface périphérique extérieure du flasque (26) à la première face (18) du flasque (12), le support étant **caractérisé en ce qu'**il comprend une nervure (46) disposée dans chaque évidement de manière à rigidifier le flasque (12)

2. Support de roue (10) selon la revendication 1, dans lequel la deuxième face (20) du flasque (12) est destinée à être en contact avec une jante (6), chaque premier taraudage (22) étant configuré pour accueillir une vis de fixation de la jante (28).

3. Support de roue (10) selon l'une des revendications 1 ou 2, comportant des deuxièmes taraudages (40) comportant chacun un axe central parallèle à l'axe central (A) du cylindre (14) et traversant le cylindre (14), les deuxièmes taraudages (40) étant disposés selon un diamètre du cylindre (14), le flasque (12) comprenant des deuxièmes évidements (42) prolongeant les deuxièmes taraudages (40), une première face (36) du cylindre (14) opposée à une deuxième face (38) du cylindre (14) en contact avec le flasque (12) étant destinée à être en contact avec un disque de frein (8), chaque deuxième taraudage (40) étant configuré pour accueillir une vis de fixation du disque de frein (44).

4. Support selon l'une quelconque des revendications 1 à 3, dans lequel chaque premier taraudage (22) est inséré dans une nervure de taraudage (30).

5. Roue (4) de véhicule automobile (2) comprenant une jante (6), un disque de frein (8) et un support de roue (10) selon l'une quelconque des revendications 1 à 4, la jante (6) étant en contact avec la deuxième face (20) du flasque (12) et le disque de frein (8) étant en contact avec une première face (36) du cylindre (14) opposée à une deuxième face (38) du cylindre (14) en contact avec le flasque (12).

6. Véhicule automobile (2) **caractérisé en ce qu'**il comprend au moins une roue (4) selon la revendication 5.

7. Procédé (48) de dimensionnement d'un support de roue (10) pour véhicule automobile (2), le support de roue comprenant un flasque (12) creux et un cylindre (14) creux coaxiaux, le cylindre (14) creux étant solidaire du flasque (12) creux, le diamètre extérieur du flasque (12) creux étant supérieur au diamètre extérieur du cylindre (14) creux de sorte que le cylindre (14) ne recouvre pas le flasque (12) dans une portion annulaire (16) du flasque (12) creux, le flasque (12) creux comportant une première face (18) en contact avec le cylindre (14), une deuxième face (20) opposée à la première face (18) et des premiers taraudages (22) s'étendant entre les première et deuxième faces (18, 20) et traversant le flasque (12), les premiers taraudages (22) étant disposés selon un diamètre du flasque (12) dans la portion annulaire (16), **caractérisé en ce que** le procédé comprend la réalisation d'évidements dans la portion annulaire (16) disposés entre deux premiers taraudages (22) successifs et s'étendant de la surface périphérique extérieure du flasque (26) à la première face (18) du flasque (12), une nervure (46) étant disposée dans chaque évidement de manière à rigidifier le flasque (12).

## Patentansprüche

1. Radträger (10) für ein Kraftfahrzeug (2) mit einem Hohlflansch (12) und einem koaxialen Hohlzylinder (14), wobei der Hohlzylinder (14) fest mit dem Hohlflansch (12) verbunden ist, wobei der Außendurchmesser des Hohlflansches (12) größer als der Außendurchmesser des Hohlzylinders (14) ist, so dass der Zylinder (14) den Flansch (12) in einem ringförmigen Abschnitt (16) des Hohlflansches (12) nicht überdeckt, wobei der Hohlflansch (12) eine erste Seite (18) in Kontakt mit dem Zylinder (14), eine zweite Seite (20), die der ersten Seite (18) gegenüberliegt, und erste Gewindebohrungen (22) aufweist, die sich zwischen der ersten und der zweiten Seite (18, 20) erstrecken und durch den Flansch (12) verlaufen, wobei die ersten Gewindebohrungen (22) entlang eines Durchmessers des Flansches (12) in dem ringförmigen Abschnitt (16) angeordnet sind, wobei der ringförmige Abschnitt (16) erste Aussparungen (24) aufweist, die zwischen zwei aufeinanderfolgenden ersten Gewindebohrungen (22) angeordnet sind und sich von der äußeren Umfangsfläche des Flansches (26) bis zur ersten Seite (18) des Flansches (12) erstrecken, wobei der Träger **dadurch gekennzeichnet ist, dass** er eine Rippe (46) aufweist, die in jeder Aussparung angeordnet ist, um den Flansch (12) zu versteifen.

2. Radträger (10) nach Anspruch 1, wobei die zweite Seite (20) des Flansches (12) dazu bestimmt ist, mit einer Felge (6) in Kontakt zu kommen, wobei jede erste Gewindebohrung (22) so gestaltet ist, dass sie eine Felgenbefestigungsschraube (28) aufnimmt.

3. Radträger (10) nach einem der Ansprüche 1 oder 2, mit zweiten Gewindebohrungen (40), die jeweils eine Mittelachse parallel zur Mittelachse (A) des Zylinders (14) aufweisen und durch den Zylinder (14) verlaufen, wobei die zweiten Gewindebohrungen (40) entlang eines Durchmessers des Zylinders (14) angeordnet sind, der Flansch (12) zweite Aussparungen (42) aufweist, die die zweiten Gewindebohrungen (40) verlängern, wobei eine erste Seite (36) des Zylinders (14), die einer zweiten Seite (38) des Zylinders (14) gegenüberliegt, die mit dem Flansch (12) in Kontakt steht, dazu bestimmt ist, mit einer Bremsscheibe (8) in Kontakt zu stehen, wobei jede zweite Gewindebohrung (40) so konfiguriert ist, dass sie eine Befestigungsschraube der Bremsscheibe (44) aufnimmt.

4. Träger nach einem der Ansprüche 1 bis 3, wobei jede erste Gewindebohrungen (22) in eine Gewinderippe (30) eingesetzt ist.

5. Rad (4) eines Kraftfahrzeugs (2) mit einer Felge (6), einer Bremsscheibe (8) und einem Radträger (10) nach einem der Ansprüche 1 bis 4, wobei die Felge (6) mit der zweiten Seite (20) des Flansches (12) in Kontakt steht und die Bremsscheibe (8) mit einer ersten Seite (36) des Zylinders (14) in Kontakt steht, die einer zweiten Seite (38) des Zylinders (14) gegenüberliegt, die mit dem Flansch (12) in Kontakt steht.

6. Kraftfahrzeug (2), **dadurch gekennzeichnet, dass** es mindestens ein Rad (4) nach Anspruch 5 aufweist.

7. Verfahren (48) zur Dimensionierung eines Radträgers (10) für ein Kraftfahrzeug (2), wobei der Radträger einen Hohlflansch (12) und einen koaxialen Hohlzylinder (14) aufweist, wobei der Hohlzylinder (14) fest mit dem Hohlflansch (12) verbunden ist, wobei der Außendurchmesser des Hohlflansches (12) größer als der Außendurchmesser des Hohlzylinders (14) ist, so dass der Zylinder (14) den Flansch (12) in einem ringförmigen Abschnitt (16) des Hohlflansches (12) nicht überdeckt, wobei der Hohlflansch (12) eine erste Seite (18) in Kontakt mit dem Zylinder (14), eine zweite Seite (20), die der ersten Seite (18) gegenüberliegt, und erste Gewindebohrungen (22) aufweist, die sich zwischen der ersten und der zweiten Seite (18, 20) erstrecken und durch den Flansch (12) verlaufen, wobei die ersten Gewindebohrungen (22) entlang eines Durchmessers des Flansches (12) in dem ringförmigen Abschnitt (16) angeordnet sind, **dadurch gekennzeichnet, dass** das Verfahren die Herstellung von Aussparungen in dem ringförmigen Abschnitt (16) aufweist, die zwischen zwei aufeinanderfolgenden ersten Gewindebohrungen (22) angeordnet sind und sich von der äußeren Umfangsfläche des Flansches (26) bis zur ersten Seite (18) des Flansches (12) erstrecken, wobei eine Rippe (46) in jeder Aussparung angeordnet ist, um den Flansch (12) zu versteifen.

## Claims

1. Wheel support (10) for a motor vehicle (2) comprising a hollow flange (12) and a hollow cylinder (14) which are coaxial, the hollow cylinder (14) being secured to the hollow flange (12), the outside diameter of the hollow flange (12) being greater than the outside diameter of the hollow cylinder (14) so that the cylinder (14) does not overlap the flange (12) in an annular portion (16) of the hollow flange (12), the hollow flange (12) having a first face (18) in contact with the cylinder (14), a second face (20) opposite to the first face (18), and first tapped holes (22) extending between the first and second faces (18, 20) and passing through the flange (12), the first tapped holes (22) being arranged on a diameter of the flange (12) in the annular portion (16), the annular portion (16) comprising first recesses (24) arranged between two successive first tapped holes (22) and extending from the exterior peripheral surface of the flange (26) to the first face (18) of the flange (12), the support being **characterized in that** it comprises a rib (46) arranged in each recess so as to stiffen the flange (12).

2. Wheel support (10) according to Claim 1, wherein the second face (20) of the flange (12) is intended to be in contact with a wheel-rim (6), each first tapped hole (22) being configured to receive a wheel-rim fixing threaded fastener (28).

3. Wheel support (10) according to one of Claims 1 and 2, comprising second tapped holes (40) each having a central axis parallel to the central axis (A) of the cylinder (14) and passing through the cylinder (14), the second tapped holes (40) being arranged on a diameter of the cylinder (14), the flange (12) comprising second recesses (42) extending the second tapped holes (40), a first face (36) of the cylinder (14), opposite to a second face (38) of the cylinder (14) in contact with the flange (12), being intended to be in contact with a brake disc (8), each second tapped hole (40) being configured to receive a brake-disc fixing threaded fastener (44).

4. Support according to any one of Claims 1 to 3, wherein each first tapped hole (22) is inserted into a tapping rib (30).

5. Wheel (4) for a motor vehicle (2) comprising a wheel-rim (6), a brake disc (8) and a wheel support (10) according to any one of Claims 1 to 4, the wheel-rim (6) being in contact with the second face (20) of the flange (12) and the brake disc (8) being in contact with a first face (36) of the cylinder (14) opposite to a second face (38) of the cylinder (14) in contact with the flange (12).

6. Motor vehicle (2), **characterized in that** it comprises at least one wheel (4) according to Claim 5.

7. Method (48) for engineering a wheel support (10) for a motor vehicle (2), the wheel support comprising a hollow flange (12) and a hollow cylinder (14) which are coaxial, the hollow cylinder (14) being secured to the hollow flange (12), the outside diameter of the hollow flange (12) being greater than the outside diameter of the hollow cylinder (14) so that the cylinder (14) does not overlap the flange (12) in an annular portion (16) of the hollow flange (12), the hollow flange (12) having a first face (18) in contact with the cylinder (14), a second face (20) opposite to the first face (18), and first tapped holes (22) extending between the first and second faces (18, 20) and passing through the flange (12), the first tapped holes (22) being arranged on a diameter of the flange (12) in the annular portion (16), **characterized in that** the method comprises creating recesses in the annular portion (16), these being arranged between two successive first tapped holes (22) and extending from the exterior peripheral surface of the flange (26) to the first face (18) of the flange (12), a rib (46) being arranged in each recess so as to stiffen the flange (12).
